# EUROPEAN PATENT APPLICATION

(11) **EP 2 060 669 A1**
(43) Date of publication of application: **20.05.2009**
(21) Application number: 08168326.0
(22) Date of filing: 05.11.2008
(51) Int. Cl.: D06F 37/26

(54) **Bearing housing and washing machine therewith**

(30) Priority: 05.11.2007 KR 20070112010
(71) Applicant: Daewoo Electronics Corporation, Seoul 100-031 (KR)
(72) Inventor: Lee, Choong Hwi, Seoul (KR)
(74) Representative: Michalski Hüttermann & Partner Patentanwälte

(57) **Abstract**

A bearing housing (200) and a washing machine (400) including the same are disclosed. The bearing includes a bearing support (210) supporting a bearing, a rib (220) formed integrally with the bearing support and including a penetration part (222), and a flange part (230) extending radially from the rib. The washing machine can maintain concentricity of the stator and permit simplification of an assembly process.

## Description

### BACKGROUND OF THE INVENTION

### 1. Field of the Invention

The present invention relates to a bearing housing and, more particularly, to a bearing housing capable of simplifying an assembly process and maintaining concentricity of a stator, and a washing machine including the same.

### 2. Description of the Related Art

Generally, a washing machine is designed to wash laundry using a suitable detergent and mechanical force. Particularly, a drum type washing machine is designed to receive the laundry in a horizontally disposed drum which is rotated by a drive force from a motor, and to wash the laundry by impact generated between the laundry and the drum when the laundry is lifted and dropped inside the rotating drum. The drum type washing machine has many advantages, such as minimal damage to and less entanglement of laundry, etc.

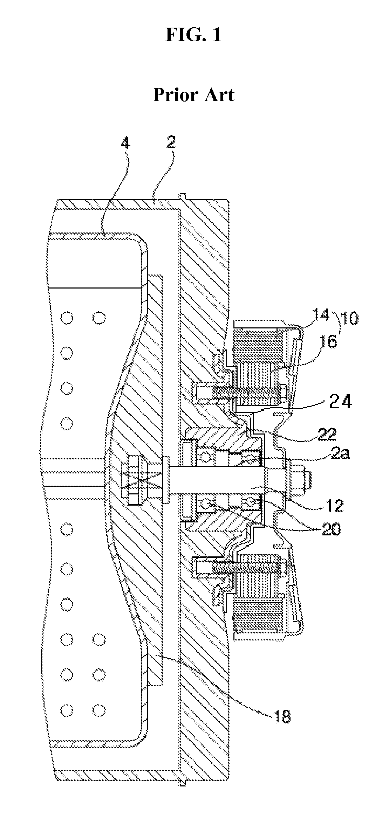

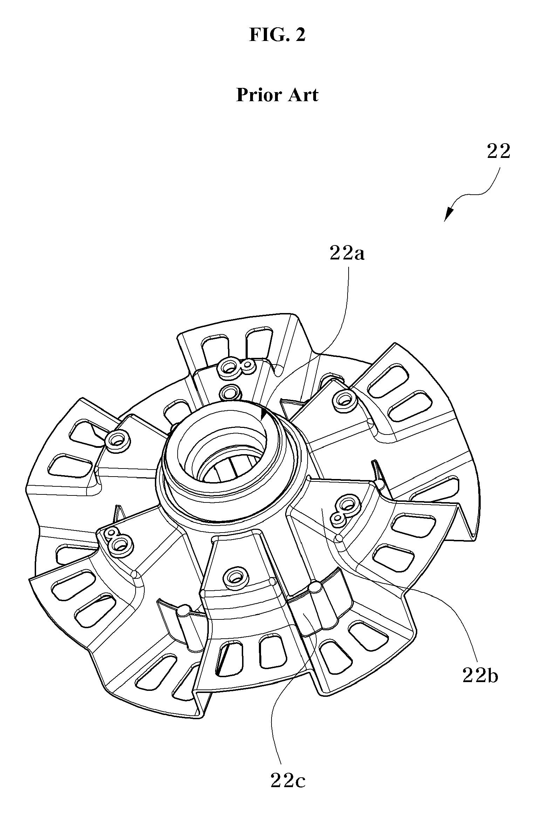

Fig. 1 is a sectional view illustrating a rear side of a tube of a conventional washing machine, and Fig. 2 is a perspective view of a bearing housing shown in Fig. 1.

Referring to Fig. 1, a conventional washing machine includes a cabinet (not shown) having a tub 2 and a drum 4 in which laundry is washed, and a door (not shown) attached to the cabinet to open or close an opening of the cabinet through which laundry is input into and removed from the drum 4.

The drum 4 is rotatably disposed inside the tub 2, on the rear side of which a motor 10 is mounted to rotate the drum 4.

The motor 10 is connected with the drum 4 via a rotational shaft 12 to transmit a rotational force to the drum 4. The motor 10 includes a rotor 14 connected with the shaft 12 to cooperate therewith and a stator 16 disposed inside the rotor 14 to face the rear side of the tub 12.

Further, a spider 18 is fastened between the drum 4 and the rotational shaft 12 to ensure more effective transmission of the rotational force from the motor 10 to the drum 4 through the rotational shaft 12.

The tub 2 is formed at the center of the rear side with a through-hole 2a through which the rotational shaft 12 passes, and which has a bearing housing 22 disposed therein and having a bearing 20 supporting the rotational shaft 12.

The bearing housing 22 is formed integrally with the tub 2 via insert-injection molding. As shown in Fig. 2, the bearing housing 22 includes a bearing support 22a for supporting the bearing and a stator fastening part 22b formed outside the bearing support 22a. The stator fastening part 22b is formed with a rib 22c.

In Fig. 1, a metallic supporter 24 is secured to the rear wall of the tub 2 to be disposed between the rear wall of the tub 2 and the stator 16.

One side of the supporter 24 closely contacts the rear wall of the tub 2, and the other side thereof closely contacts an outer circumference of the bearing housing 22 to maintain concentricity of the stator 16 while supporting the stator 16.

In such a conventional washing machine, since the bearing housing and the supporter are separately provided, processes of assembling the bearing housing and the supporter to the rear wall of the tub must be separately performed on an assembly line, followed by fastening the stator. As a result, for the conventional washing machine, the number of assembling processes and components are increased, thereby causing productivity deterioration and an increase in manufacturing costs. Furthermore, since the supporter is disposed between the bearing housing and the stator, the concentricity of the bearing housing and the stator tends to be deviated due to errors in assembly.

Further, since the tube is made of a different material from that of the bearing housing, a space between the tub and the bearing housing, specifically, the space in the stator fastening part is not filled with a resin, thereby forming a void therein due to different shrinkage rates by cooling during injection molding of the tub. As a result, coupling strength between the tub and the bearing housing is weakened. Therefore, there is a need for solving these problems of the conventional washing machine.

### SUMMARY OF THE INVENTION

The present invention is conceived to solve the problems of the conventional techniques as described above, and an aspect of the present invention is to provide a washing machine that can ensure a supporting force and concentricity with respect to a bearing housing and a stator at a rear wall of a tub while simplifying an assembly process, and that is improved in structure to increase coupling strength between the tub and the bearing housing.

In accordance with an aspect of the present invention, a bearing housing includes: a bearing support supporting a bearing; a rib formed integrally with the bearing support and including a penetration part; and a flange part extending radially from the rib.

The rib may further include a partition dividing the penetration part.

The rib may further include a closed part.

The closed part may be open at one side thereof facing a stator and may be closed at the other side.

The rib may further include a partition disposed between the penetration part and the closed part to divide the penetration part and the closed part.

The flange part may include a bottom surface portion constituting a bottom of the flange part and an upper surface portion extending from the bottom portion to form a step between the bottom surface portion and the upper surface portion.

The upper surface portion may be formed with a protrusion extending radially from an outer circumference thereof.

The flange part may be formed with a flange rib bent from an outer circumference thereof.

In accordance with another aspect of the present invention, a washing machine includes: a tub; a bearing housing formed by insert injection molding into the tub; and a stator coupled to the bearing housing, the bearing housing including a bearing support to support a bearing, a rib formed integrally with the bearing support and including a penetration part, and a flange part extending radially from the rib.

The bearing housing may be formed with a fastening part to which the stator is coupled, and may be insert-injection molded into the tub to expose the fastening part from the tub.

The rib may further include a partition dividing the penetration part.

The rib may further include a closed part, and the closed part may be open at one side thereof facing the stator and may be closed at the other side.

The rib may further include a partition disposed between the penetration part and the closed part to divide the penetration part and the closed part.

The flange part may include a bottom surface portion constituting a bottom of the flange part and an upper surface portion extending from the bottom surface portion to form a step between the bottom surface portion and the upper surface portion.

The flange part may have a flange rib bent from an outer circumference thereof.

### BRIEF DESCRIPTION OF THE DRAWINGS

The above and other aspects, features and advantages of the present invention will become apparent from the following description of exemplary embodiments given in conjunction with the accompanying drawings, in which:
Fig. 1 is a sectional view illustrating a rear side of a tube of a conventional washing machine;
Fig. 2 is a perspective view of a bearing housing shown in Fig. 1;
Fig. 3 is a section side elevation of a washing machine according to an embodiment of the present invention;
Fig. 4 is a perspective view of a bearing housing shown in Fig. 3;
Fig. 5 is a plan view of the bearing housing shown in Fig. 3;
Fig. 6 is a cross-sectional view taken along line VI-VI;
Fig. 7 is a cross-sectional view taken along line VII-VII;
Fig. 8 is a partially sectional perspective view of the washing machine of Fig. 3 with some components omitted therefrom; and
Fig. 9 is a plan view of a bearing housing according to another embodiment of the present invention.

### DETAILED DESCRIPTION OF THE INVENTION

Exemplary embodiments of the present invention will be described in detail with reference to the accompanying drawings hereinafter. For convenience of description, a drum type washing machine will be described by way of illustration. Here, it should be noted that the drawings are not to precise scale and may be exaggerated in thickness of lines or size of components for descriptive convenience and clarity.

Furthermore, terms used herein are defined by taking functions of the present invention into account and can be changed according to the custom or intention of users or operators. Therefore, definition of the terms should be made according to overall disclosures set forth herein.

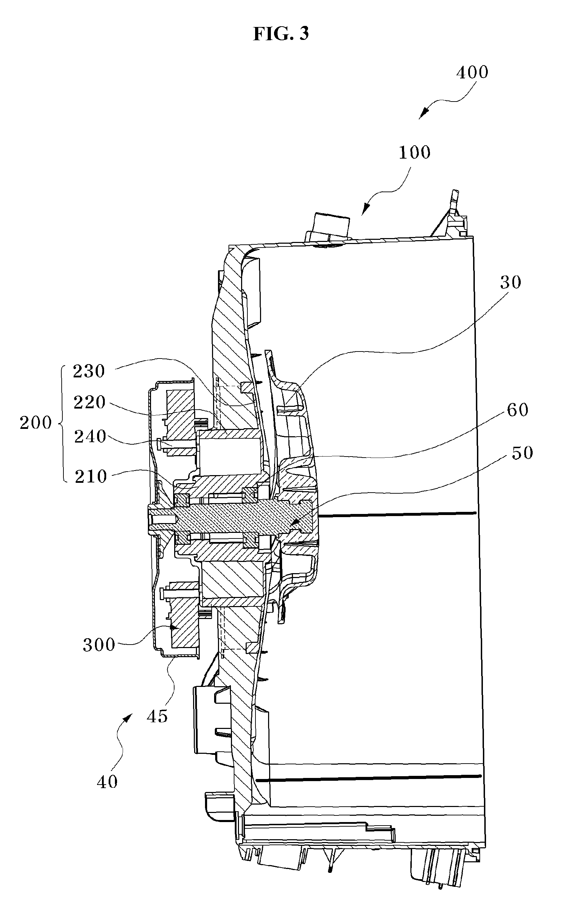

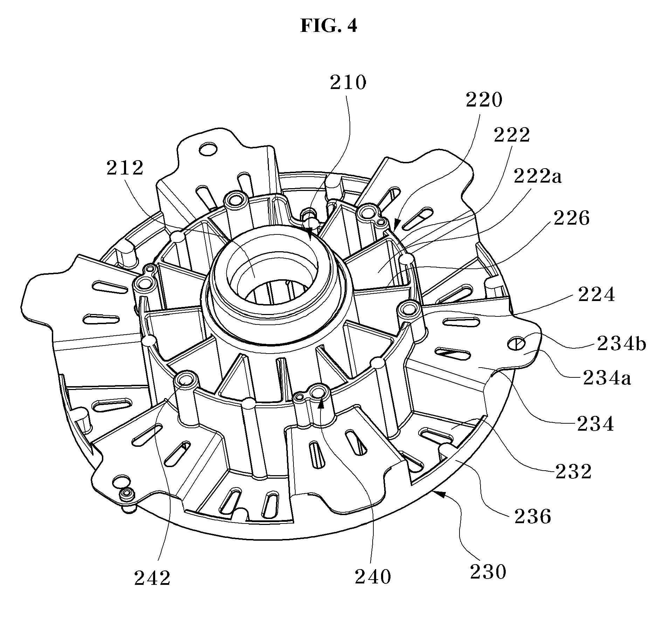

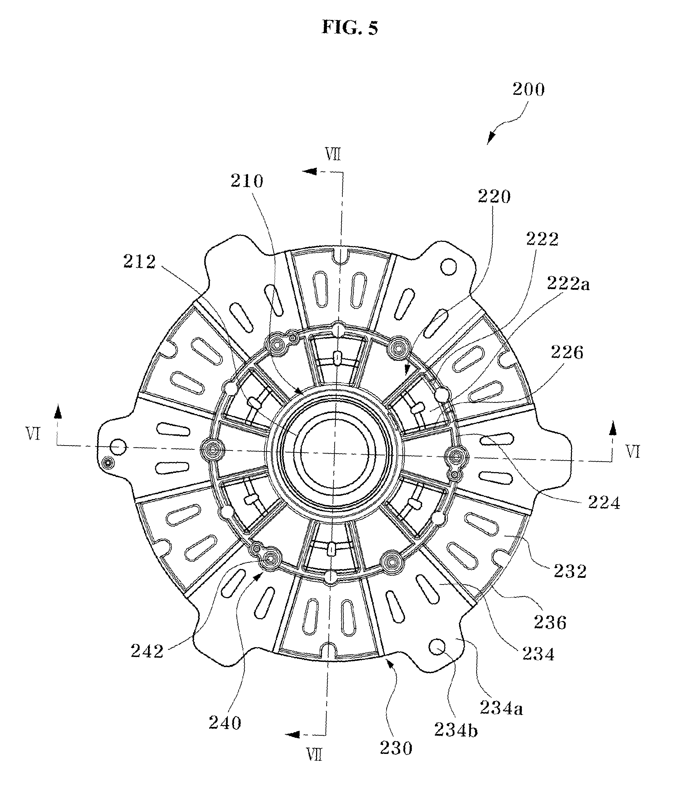

Fig. 3 is a section side elevation of a washing machine according to an embodiment of the present invention, Fig. 4 is a perspective view of a bearing housing shown in Fig. 3, and Fig. 5 is a plan view of the bearing housing shown in Fig. 3.

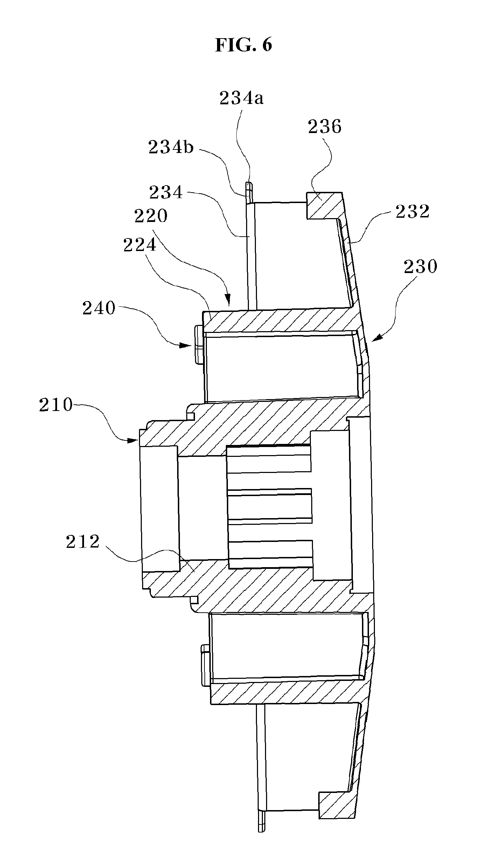

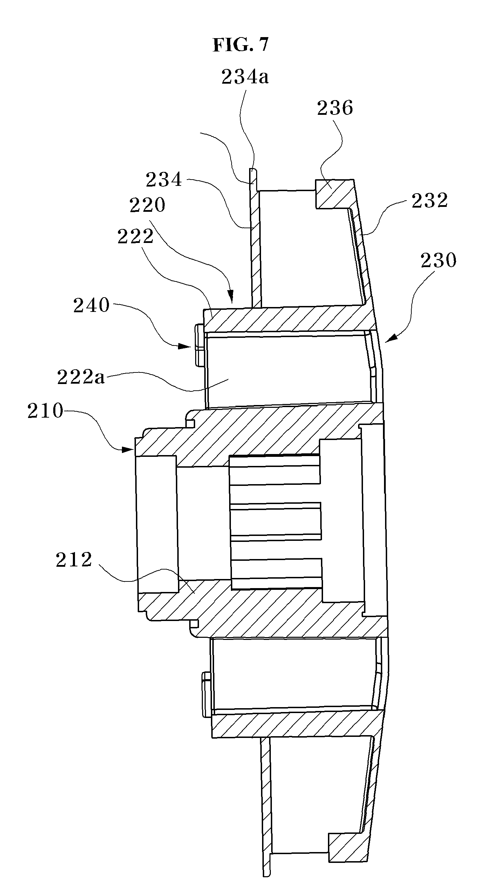

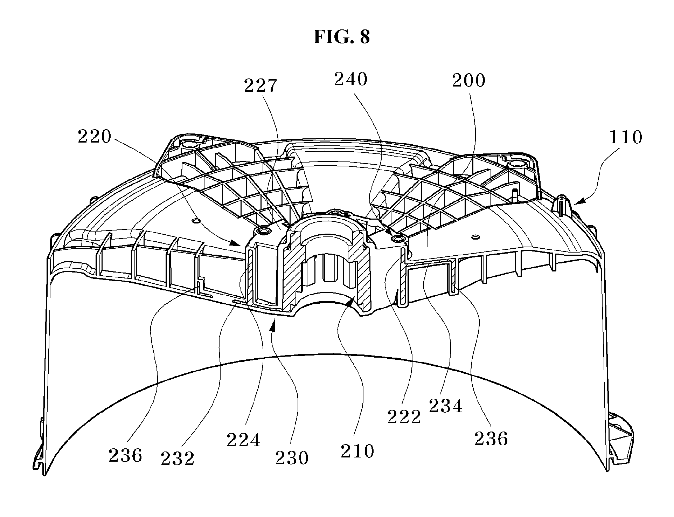

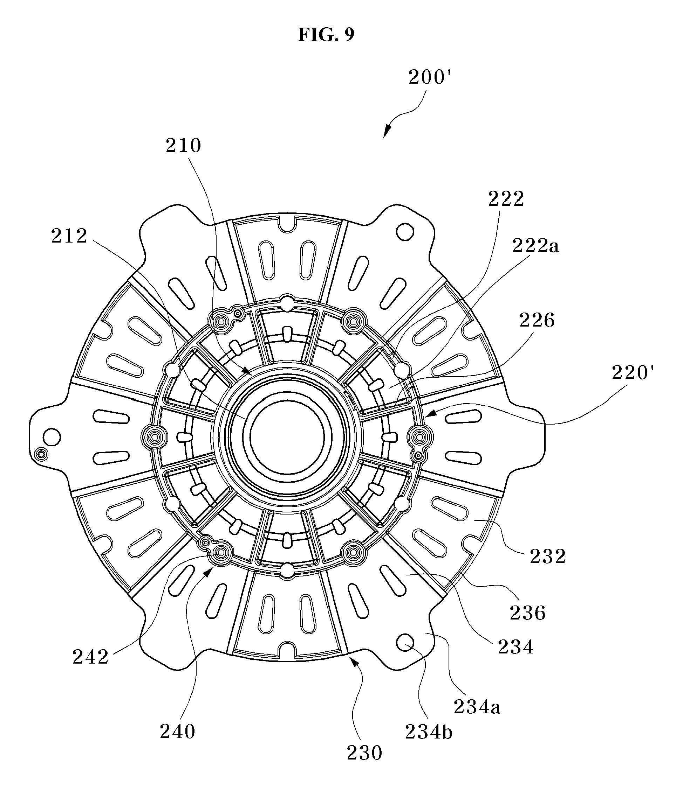

Fig. 6 is a cross-sectional view taken along line VI-VI, Fig. 7 is a cross-sectional view taken along line VII-VII, Fig. 8 is a partially sectional perspective view of the washing machine of Fig. 3 with some components omitted therefrom, and Fig. 9 is a plan view of a bearing housing according to another embodiment of the present invention.

Referring to Fig. 3, the washing machine 400 according to the embodiment of this invention includes a tub 100, a bearing housing 200, and a stator 300.

The tub 100 is an injection molded product and can be formed of plastics or synthetic resins (hereinafter, generally referred to as a "resin"). The tub 100 is disposed inside a cabinet (not shown), and has a drum 30 rotatably disposed inside the tub 100. A shaft 50 is connected with the drum 30 through the center of a rear wall of the tub 100 to transmit a drive force from a motor 40 to the drum 30.

According to this embodiment, since the tub 100 is made of a lightweight resin through injection molding, the washing machine 400 has a light weight and improved productivity.

The tub 100 is provided at the center of a rear wall thereof with a bearing housing 200 for supporting a bearing 60 disposed at either end of the shaft 50 while being fastened to the stator 300.

The bearing housing 200 is insert-injection molded into the rear wall of the tub 100 to be integral with the rear wall of the tub 100 during injection molding of the tub 100. As shown in Figs. 4 to 7, the bearing housing 200 includes a bearing support 210, a rib 220, and a flange part 230.

The bearing support 210 is formed in a sleeve shape to be inserted into the center of the rear wall of the tub 100, and has a stepped surface 212 formed on an inner surface thereof to support the bearing 60.

The rib 220 is integral with the bearing support 210 and extends radially from the bearing support 210. The rib 220 serves to increase a coupling force between the resin and the bearing housing 200 when the bearing housing 200 is insert-injection molded into the tub 100. The rib 220 has a penetration part 222.

The penetration part 222 is formed with a through-hole 222a. The through-hole 222a is filled with a resin when the bearing housing 200 is insert-injection molded into the tub 100. Since the through-hole 222a is filled with the resin, the penetration part 222 is surrounded by the resin, as shown in Fig. 8.

As such, since the penetration part 222 is surrounded by the resin, the coupling force between the resin and the bearing housing 200 is enhanced. In particular, since the resin surrounds both inner and outer sides of the penetration part 222, the bearing housing 200 is insert-injection molded into the tub 100 such that both inner and outer sides of the bearing housing 200 are surrounded by the tub 100. As a result, the bearing housing 200 is further rigidly coupled to the tub 100.

The rib 220 may further include a closed part 224. Referring to Fig. 4, like the penetration part 222, the closed part 224 is formed outside the bearing support 210 to be located between the penetration parts 222.

The bearing housing 200 further includes a partition 226 between the penetration part 222 and the closed part 224 to divide the penetration part 222 and the closed part 224. The partition 226 has a rib shape.

The closed part 224 is open at one side thereof facing a stator, and is closed at the other side thereof, which is inserted into the tub 100. Like the penetration part 222, the closed part 224 is also filled with the resin during insert injection molding of the bearing housing 200, but is different from the penetration part 222 in that a coupling structure of the closed part 224 with respect to the tub 100 is different from that of the penetration part 222 since the other side of the closed part 224 inserted into the tub 100 is closed. In other words, as shown in Fig. 8, the closed part 224 is not completely filled with the resin to such a degree that the resin penetrates the closed part 224.

The closed part 224 is configured to allow the resin to be introduced into the closed part 224 and to have the closed other side disposed in parallel with the rear wall of the tub 100, thereby increasing the coupling force between the bearing housing 200 and the resin. Additionally, the closed part 224 serves to allow the bearing housing 200 to be further rigidly coupled to the rear wall of the tub 100 by imparting surface resistance to an interface between the tub 100 and the bearing housing 200.

The flange part 230 is connected with the rib 220 and extends radially from the rib 220 to be inserted into the tub 100. The flange part 230 includes a bottom surface portion 232 constituting the bottom of the flange part 230 and an upper surface portion 234 extending from the bottom surface portion 232 to form a step between the bottom surface portion 232 and the upper surface portion 234. In this manner, the flange part 230 is generally formed to have a concave-convex shape.

The flange part 230 enlarges a coupling area between the tub 100 and the bearing housing 200, thereby increasing rigidity of the coupling area between the rear wall of the tub 100 and the bearing housing 200 during the insert injection molding of the bearing housing 200. Further, the flange part 230 serves to effectively absorb and damp vibration of the motor 40 during operation of the washing machine.

The upper surface portion 234 of the flange part 230 may include a protrusion 234a formed thereon. The protrusion 234a protrudes from an outer circumference of the upper surface portion 234 and serves to further enlarge the coupling area between the tub 100 and the bearing housing 200.

The protrusion 234a may be formed with a through-hole 234b, thereby increasing the coupling force between the resin and the bearing housing 200 during the insert injection molding of the bearing housing 200.

The flange part 230 may further include a flange rib 236. The flange rib 236 is bent from the outer circumference of the flange part 230. The flange rib 236 reinforces the flange part 230 and the bearing housing 200 comprising the flange part, and serves to further increase the coupling force between the resin and the bearing housing 200 during the insert injection molding of the bearing housing 200.

The stator 300 constituting the motor 40 together with the rotor 45 is coupled to the bearing housing 200 so that the stator 300 is secured to the tub 100. For this purpose, the bearing housing 200 further includes a fastening part 240, as shown in Figs. 4 to 8. The fastening part 240 is formed so as not to be embedded in the tub 100, but to be exposed from the resin, as is different from other components of the bearing housing 200 which are embedded in the tub 100 by insert injection during injection molding of the tub 100.

The fastening part 240 is formed with a fastening hole 242, which has a thread formed therein. However, the present invention it not limited to this configuration. For example, the fastening part 240 may be formed to protrude from the bearing housing 200 towards the stator 300 and to have a thread formed on a protruded outer circumferential surface of the fastening part 240. As such, the bearing housing 200 is provided with the fastening part 240 that has the fastening hole 242 therein, thereby eliminating a separate process of forming the fastening hole in the tub 100.

As shown in Fig. 8, when the penetration part 222 and the closed part 224 are filled with the resin, the rib 220 including the penetration part 222 and the closed part 224 is formed with a positioning surface 227 at one side of the rib 220 facing the stator 300 (see Fig. 3).

The stator 300 is mounted to be brought into surface contact with the positioning surface 227 and is coupled to the bearing housing 200 by fastening between the fastening part 240 and fastening members (not shown) such as bolts.

The bearing housing 200 may be formed of metallic materials such as aluminum and the like. In this case, since the bearing housing 200 does not suffer thermal deformation even at high temperatures, it can be applied to the drum type washing machine that performs a drying operation.

Further, the tub 100 is described as being made of the plastic material or the synthetic resin in this embodiment, but the present invention is not limited thereto. Alternatively, the tub 100 may be made of metallic materials. In this case, the bearing housing 200 can be insert-injection molded into the tub 100 by die-casting or the like.

Fig. 9 shows a bearing housing 200' according to another embodiment of the present invention. In this bearing housing 200', a rib 220' does not include the closed part 224 (see Fig. 5), but includes only a penetration part 222.

As apparent from the above description, in the washing machine according to the present invention, a bearing housing is insert-injection molded into a tube of the washing machine to eliminate a process of assembling the bearing housing to the tub, thereby simplifying an assembling process and reducing manufacturing costs.

In addition, the bearing housing is formed integrally with the tub, thereby preventing concentricity of the bearing housing and a stator from being deviated due to assembly errors.

Further, since the bearing housing is formed with a rib having a penetration part and a closed part, the bearing housing can be insert-injection molded into the tub to be surrounded by a resin inside and outside the tub, so that a coupling force between the bearing housing and the resin is increased, and surface resistance is imparted to an interface between the tub and the bearing housing to allow the bearing housing to be further rigidly coupled to the tub.

Moreover, the bearing housing is formed with a flange part extending radially from the tub and having a flange rib formed on the outer circumference of the flange part, so that a coupling area between the tub and the bearing housing is enlarged, thereby increasing rigidity of the coupling area between the rear wall of the tub and the bearing housing without a separate supporter. As a result, the present invention can effectively absorb and damp vibration of a motor during operation of the washing machine.

Although the present invention has been described with reference to the embodiments and the accompanying drawings, it will be apparent to those skilled in the art that the embodiments are given by way of illustration, and that various modifications and equivalent embodiments can be made without departing from the spirit and scope of the present invention. Further, the description of the drum type washing machine as provided herein is only one example of the present invention, and the present invention can be applied to other devices. Accordingly, the scope and spirit of the present invention should be limited only by the following claims.

## Claims

1. A bearing housing comprising:
a bearing support supporting a bearing;
a rib formed integrally with the bearing support and comprising a penetration part; and
a flange part extending radially from the rib.

2. The bearing housing according to claim 1, wherein the rib further comprises a partition dividing the penetration part.

3. The bearing housing according to claim 1, wherein the rib further comprises a closed part.

4. The bearing housing according to claim 3, wherein the closed part is open at one side thereof facing a stator and is closed at the other side.

5. The bearing housing according to claim 3, wherein the rib further comprises a partition disposed between the penetration part and the closed part to divide the penetration part and the closed part.

6. The bearing housing according to claim 1, wherein the flange part comprises a bottom surface portion constituting a bottom of the flange part and an upper surface portion extending from the bottom portion to form a step between the bottom surface portion and the upper surface portion.

7. The bearing housing according to claim 6, wherein the upper surface portion is formed with a protrusion extending radially from an outer circumference thereof.

8. The bearing housing according to claim 1, wherein the flange part is formed with a flange rib bent from an outer circumference thereof.

9. A washing machine comprising:
a tub;
a bearing housing formed by insert injection molding into the tub, the bearing housing comprising a bearing support supporting a bearing, a rib formed integrally with the bearing support and comprising a penetration part, and a flange part extending radially from the rib; and
a stator coupled to the bearing housing.

10. The washing machine according to claim 9, wherein the bearing housing is formed with a fastening part to which the stator is coupled, and is insert-injection molded into the tub to expose the fastening part from the tub.

11. The washing machine according to claim 9, wherein the rib further comprises a partition dividing the penetration part.

12. The washing machine according to claim 9, wherein the rib further comprises a closed part, the closed part being open at one side thereof facing the stator and closed at the other side.

13. The washing machine according to claim 12, wherein the rib further comprises a partition disposed between the penetration part and the closed part to divide the penetration part and the closed part.

14. The washing machine according to claim 9, wherein the flange part comprises a bottom surface portion constituting a bottom of the flange part and an upper surface portion extending from the bottom portion to form a step between the bottom surface portion and the upper surface portion.

15. The washing machine according to claim 9, wherein the flange part comprises a flange rib bent from an outer circumference thereof.
